(19) Europäisches Patentamt
European Patent Office
Office européen des brevets

(11) **EP 3 530 397 B1**

(12) **EUROPEAN PATENT SPECIFICATION**

(45) Date of publication and mention
of the grant of the patent:
**25.01.2023  Bulletin 2023/04**

(51) International Patent Classification (IPC):
**B23K 35/36** *(2006.01)*        **B23K 35/362** *(2006.01)*
**B23K 101/42** *(2006.01)*

(21) Application number: **19159287.2**

(22) Date of filing: **26.02.2019**

(52) Cooperative Patent Classification (CPC):
**B23K 35/3612; B23K 35/3618; B23K 35/362;**
B23K 2101/42

(54) **FLUX AND SOLDER PASTE**

FLUSSMITTEL UND LÖTPASTE

FLUX ET PÂTE DE SOUDURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2018   JP 2018032525**

(43) Date of publication of application:
**28.08.2019   Bulletin 2019/35**

(73) Proprietor: **Tamura Corporation
Tokyo 178-8511 (JP)**

(72) Inventors:
• **SATO, Takehito
Iruma-shi, Saitama 358-0032 (JP)**
• **KURATA, Hirotake
Iruma-shi, Saitama 358-0032 (JP)**

• **OOTOSHI, Hiroshi
Iruma-shi, Saitama 358-0032 (JP)**

(74) Representative: **Cabinet Beau de Loménie
158, rue de l'Université
75340 Paris Cedex 07 (FR)**

(56) References cited:
**CN-A- 106 001 998     CN-A- 106 078 002
JP-A- 2004 330 269     JP-A- 2017 035 731
JP-A- 2017 064 717     JP-A- 2017 064 777
US-A- 5 919 317**

Remarks:
The file contains technical information submitted after
the application was filed and not included in this
specification

**Description**

Technical Field

The present invention relates to a flux and a solder paste.

Background Art

Examples of the method for joining an electronic component to a conductor pattern formed on an electronic circuit board such as a printed circuit board or a module board include a solder joining method using a solder paste.
Commonly, a solder paste is formed by mixing a flux and a solder alloy powder. In solder joining, a solder paste is printed on an electronic circuit board, for example, by screen printing, an electronic component is mounted on the desired position, and the object is heated, thereby forming a solder joined body made of a solder paste on the electronic circuit board (in the present description, a solder joint formed by melting and aggregation/solidification of a solder alloy powder and a flux residue remaining on an electronic circuit mounted board after reflowing are integrally referred to as "solder joined body"). Of the solder joined body, the solder joint electrically joints a conductor pattern of the electronic circuit board and the electrode of the electronic component.
The flux contained in a solder paste removes the oxide film adhered to the conductor pattern on an electronic circuit board or the electrodes of electronic components during the heating process, and plays an important role in electrical joining between the conductor pattern and the electrodes.
However, the components such as a solvent and an activator contained in the flux are volatilized and decomposed during the heating process to generate a gas. If the solder joint under aggregation/solidification takes the gas therein and solidifies during the heating process, the solder joint thus formed contains voids therein. The voids form cavities a part of the solder joint, so that the higher the area ratio of the voids contained (generated) in a solder joint, the lower the reliability of the solder joint.
Examples of the method for inhibiting voids generated in a solder joint and the method for reducing the area ratio of voids include a method of adding a specific kind of rosin, a method of adding a specific activator, and a method of adding a cyclic organic phosphate compound as an additive to the flux (see Patent Literature 1).
Patent Literature 2 discloses a flux for a lead-free solder paste containing (A) a rosin-based base resin, (B) an activator and (C) a solvent. In the flux, a component (A) contains rosin tetraol ester (a1), a component (B) contains aliphatic dicarboxylic acid having a carbon number of 4-6 (b1), and a component (C) contains (poly) alkylene glycol monoalkyl ether (c1), branched diol having a carbon number of 5-10 (c2) and phenyl alcohol (c3).
Patent Literature 3 discloses a soldering flux paste comprising a film forming agent, solvent, an activating agent, a thixotropic agent and a stabilizer. The film forming agent is formed by matching hydroxy acrylic resin with hydrogenated polymerized rosin. The stabilizer is formed by matching amino carboxylic acid and/or a 1,3-diketone complexing agent with polyvinyl alcohol. The hydroxy acrylic resin accounts for 10%-20% of the weight of the soldering flux paste, the hydrogenated polymerized rosin accounts for 20%-30% of the weight of the soldering flux paste, the amino carboxylic acid and/or the 1,3-diketone complexing agent account/accounts for 1%-3% of the weight of the soldering flux paste, and the polyvinyl alcohol accounts for 1%-3% of the weight of the soldering flux paste.
Patent Literature 4 discloses an insulating resin composition at least comprising: (A) a compound having flux action; (C)crosslinking fine particles; and (E) a photosensitive acid generator. The composition further comprises: (B1) a resin having a phenolic hydroxyl group in which the melting point, softening point or glass transition point is ≤100°C; and (D) a crosslinking agent containing at least two amino groups converted into alkylether in the molecule or (B2) a compound in which the melting point, softening point or glass transition point is ≤100°C, and having a three membered ring or a four membered ring and having an ether radical or a thioether group.
Patent Literature 5 discloses flux paste special for unleaded tin-bismuth solder. The flux paste special for the unleaded tin-bismuth solder comprises, by weight, 10-20 parts of hydrogenated rosin, 5-10 parts of disproportionated rosin, 10-15 parts of dimer rosin, 5-10 parts of tetrahydrofurfuryl alcohol, 5-10 parts of pentaerythritol, 5-8 parts of butyl cellosolve, 5-8 parts of octyl ether, 5-8 parts of dibasic acid esters, 2-5 parts of phthalic acid dibutyl esters, 2-3 parts of oleyl alcohol polyoxyethylene ether, 3-6 parts of polyamide modified hydrogenated castor oil, 2-4 parts of succinic acid, 1-2 parts of pyridine hydrochloride, 1-2 parts of bromic acid tributylamine, 4-8 parts of DIACID 1550 and 1-3 parts of N,N,N",N"-pentamethyldiethylenetriamine.
However, these methods can inhibit the occurrence of voids in a solder joint, but do not necessarily sufficiently retain desired effect of the flux, such as printability. Furthermore, when an electronic component (a chip component) with a size of, for example, 2.0 mm × 1.2 mm or 3.2 mm × 1.6 mm is used, the occurrence of voids in a solder joint may be inhibited, but this effect may not be achieved when a larger electronic component is used.

Citation List

Patent Literature

    Patent Literature 1: Japanese Unexamined Patent Application Publication No. 2017-136636
Patent Literature 2: JP 2017 035731 A Patent Literature 3: CN 106 078 002 A Patent Literature 4: JP 2004 330269
A Patent Literature 5: CN 106 001 998 A

Summary of Invention

Technical Problem

The present invention solves the above-described problems, and is intended to provide a flux and a solder paste which reduce the void area ratio in a solder joint, and keep good print ability.

Solution to Problem

The subject-matter of the invention is defined by the claims.

Advantageous Effects of Invention

The flux and the solder paste including the flux according to the present invention reduce the void area ratio in a solder joint, and ensure good printability. Additionally, the flux and the solder paste including the flux according to the present invention reduce the void area ratio in a solder joint even if they are used on an electronic circuit board having a soldering land with a certain area or larger.

Description of Embodiments

Embodiments of the flux and solder paste of the present invention are described below in detail.

(1) Flux

The flux according to the present invention includes a base resin, an activator, a solvent, and an additive.

<Base resin>

Examples of base resin include rosin resins, acrylic resins, styrene-maleic acid resins, epoxy resins, urethane resins, polyester resins, phenoxy resins, terpene resins, and polyalkylene carbonates. The base resin of the present invention is a combination of a rosin resin and an acrylic resin.
Examples of the rosin resin include rosin such as tall oil rosin, gum rosin, and wood rosin; rosin derivatives obtained by polymerization, hydrogenatation, disproportionation, acrylation, maleinization, esterification, or phenol addition reaction of rosin; and modified rosin resins obtained by Diels-Alder reaction of these rosin or rosin derivatives with unsaturated carboxylic acids (for example, acrylic acid, methacrylic acid, maleic acid anhydride, and fumaric acid). Among them, hydrogenated acid modified rosin obtained by hydrogenating an acid modified rosin is preferred. These compounds may be used alone or in combination of two or more of them.
The acid value of the rosin resin is preferably from 80 mgKOH/g to 350 mgKOH/g, and its weight average molecular weight is preferably from 250 Mw to 1,100 Mw.
Examples of the acrylic resin include those formed by polymerizing monomers including (meth)acrylic acid. The acrylic resin may be used alone or in combination of two or more of them.
The acid value of the acrylic resin is preferably from 30 mgKOH/g to 100 mgKOH/g, and its weight average molecular weight is preferably from 3,000 Mw to 30,000 Mw.
The blending amount of the base resin is preferably 10% by mass or more and 60% by mass or less with reference to the total amount of the flux, and more preferably 20% by mass or more and 50% by mass or less.
The acid value of the whole base resin is preferably from 30 mgKOH/g to 350 mgKOH/g.
When a combination of the rosin resin and the acrylic resin is used as the base resin, the compounding ratio is preferably from 10:90 to 50:50, and more preferably from 15:85 to 30:70 in terms of the ratio of rosin resin : acrylic resin.

<Activator>

The activator can be carboxylic acids, and/or halogen-containing compounds. These compounds may be used alone or in combination of two or more of them.

Examples of the carboxylic acids include monocarboxylic acid, dicarboxylic acid, and other organic acids.

Examples of the monocarboxylic acid include propionic acid, butyric acid, valeric acid, caproic acid, enanthic acid, capric acid, lauric acid, myristic acid, pentadecylic acid, palmitic acid, margaric acid, stearic acid, tuberculostearic acid, arachidic acid, behenic acid, lignoceric acid, and glycolic acid.

Examples of the dicarboxylic acid include oxalic acid, malonic acid, succinic acid, glutaric acid, adipic acid, pimelic acid, suberic acid, azelaic acid, sebacic acid, fumaric acid, maleic acid, tartaric acid, diglycolic acid, and 1,4-cyclohexane dicarboxylic acid.

Examples of the other organic acid include dimer acid, levulinic acid, lactic acid, acrylic acid, benzoic acid, salicylic acid, anisic acid, citric acid, picolinic acid, and anthranilic acid.

These compounds may be used alone or in combination of two or more of them.

Examples of the halogen-containing compound include non-dissociative halogen compounds (undissociated activators), and dissociative halogen compounds (dissociated activators).

Examples of the undissociated activator include non-salt type organic compounds having covalently bonded halogen atoms, such as chlorides, bromides, iodides, and fluorides which include covalently bonded single elements such as chlorine, bromine, iodine, and fluorine, and the compounds including two or more different kinds of halogen atoms bonded through covalent bonds. These compounds are preferably, for example, halogenated alcohols having a polar group such as a hydroxyl group, for improving solubility in an aqueous solvent. Examples of the halogenated alcohol include brominated alcohols such as dibromobutene diol, 2,3-dibromopropanol, 2,3-dibromobutanediol, 1,4-dibromo-2-butanol, and tribromoneopentyl alcohol; brominated organic acids such as 2-bromohexanoic acid; chlorinated alcohols such as 1,3-dichloro-2-propanol and 1,4-dichloro-2-butanol; fluorinated alcohols such as 3-fluorocatechol; and other analogue compounds. These compounds may be used alone or in combination of two or more of them.

Among them, succinic acid, suberic acid, and dibromobutenediol are particularly preferably used. These compounds may be used alone or in combination of two or more of them.

The blending amount of the activator is preferably from 0.5% by mass to 20% by mass with reference to the total amount of the flux. The blending amount is more preferably from 1% by mass to 15% by mass, and particularly preferably from 1% by mass to 10% by mass.

<Solvent>

Examples of the solvent include isopropyl alcohol, ethanol, acetone, toluene, xylene, ethyl acetate, ethyl cellosolve, butyl cellosolve, hexyl diglycol, (2-ethylhexyl) diglycol, phenyl glycol, butyl carbitol, octanediol, $\alpha$-terpineol, $\beta$-terpineol, tetraethylene glycol dimethyl ether, tris(2-ethylhexyl) trimellitate, bisisopropyl sebacate, and dibutyl maleate. These compounds may be used alone or in combination of two or more of them.

The blending amount of the solvent is preferably 10% by mass or more and 65% by mass or less, more preferably 20% by mass or more and 50% by mass or less, and particularly preferably 25% by mass or more and 45% by mass or less with reference to the total amount of the flux.

<Additive>

The flux according to the present invention includes, as an additive, at least one selected from trimethylolpropane, trimethylolethane and di(trimethylolpropane), the additive being present in an amount of 0.5% by mass or more and 12% by mass or less with reference to the total amount of the flux.

If the blending amount of the additive is less than 0.5% by mass with reference to the total amount of the flux, inhibitory effect on the occurrence of voids in a solder joint may not be sufficiently achieved. Additionally, if the blending amount is more than 12% by mass, the solder paste made using the flux may have poor printability.

The additive of the present invention is at least one selected from trimethylolpropane, trimethylolethane and di(trimethylolpropane).

The blending amount of the additive is preferably 1% by mass or more and 10% by mass or less, and particularly preferably 3% by mass or more and 6% by mass or less.

<Thixotropic agent>

The flux according to the present invention may include a thixotropic agent. Examples of the thixotropic agent include hydrogenated castor oil, saturated fatty acid amides, saturated fatty acid bisamides, oxy fatty acid, and dibenzylidene sorbitols. These compounds may be used alone or in combination of two or more of them.
Among them, higher fatty acid bisamides are preferably used.

The blending amount of the thixotropic agent is preferably from 1% by mass to 10% by mass with reference to the total amount of the flux. The blending amount is even more preferably from 2% by mass to 9% by mass with reference to the total amount of the flux.

<Antioxidant>

The flux according to the present invention may include an antioxidant. Examples of the antioxidant include, but not limited to, hindered phenol antioxidants, phenol antioxidants, bisphenol antioxidants, and polymer antioxidants. Among them, hindered phenol oxidants are particularly preferred. Examples of the hindered phenol antioxidant include Irganox 245 (BASF JAPAN LTD.). These compounds may be used alone or in combination of two or more of them.

The blending amount of the antioxidant is not particularly limited, but is commonly and preferably from 0.5% by mass to 10% by mass or less with reference to the total amount of the flux.

<Other additive>

The flux according to the present invention may include other additive such as an anti-foaming agent, a rust-preventive agent, a surfactant, a heat curing agent, or a delustering agent. The blending amount of the other additive is preferably 10% by mass or less, and particularly preferably 5% by mass or less with reference to the total amount of the flux. These compounds may be used alone or in combination of two or more of them.

Usually, the larger the area of a solder joint formed on an electronic circuit board, the more difficult the discharge of the gas, which has been taken into the solder joint during solder joining, particularly during aggregation under heating, and has reached the vicinity of the center of the solder joint, from the solder joint, and the more easily the gas remains in the form of a void.

However, the flux according to the present invention includes the additive in a predetermined amount, whereby the void area ratio in a solder joint is decreased even when electronic component are solder joined using the solder paste including the flux to an electronic circuit board having a soldering land with an area of 25 mm$^2$ or more.

When an electronic component with a Sn-plated electrode is solder joined using a solder paste including the flux according to the present invention, the void area ratio in a solder joint can be decreased. In this case, the electronic circuit board preferably has been subjected to OSP treatment.

(2) Solder paste

The solder paste according to the present invention is obtained by mixing the flux and solder alloy powder.

Examples of the solder alloy powder include an alloy containing tin and lead, an alloy containing tin and lead, and at least one of silver, bismuth, and indium, an alloy containing tin and silver, an alloy containing tin and copper, an alloy containing tin, silver, and copper, and alloy containing tin and bismuth. Additionally, for example, solder alloy powders including appropriate combinations of, for example, tin, lead, silver, bismuth, indium, copper, zinc, gallium, antimony, gold, palladium, germanium, nickel, chromium, aluminum, and phosphorus may be used. Elements other than above-listed ones may be included in the combination.

The blending amount of the solder alloy powder is preferably from 65% by mass to 95% by mass, more preferably from 85% by mass to 93% by mass, and particularly preferably from 88% by mass to 91% by mass with reference to the total amount of the solder paste.

The particle size of the solder alloy powder is preferably from 20 $\mu$m to 38 um. The particle size can be measured using a particle size measuring apparatus of dynamic light scattering type.

The above embodiment describes the use of the flux in a solder paste, but the use of the flux in the present invention will not be limited to this, and may be variously used in, for example, other flux applications such as a solder ball bond flux.

Examples

The present invention is described below in detail with reference to Examples and Comparative Examples. The present invention will not be limited to these examples. Examples 3, 5, 6 and 16 are not according to the present invention.

The components listed in Tables 1 to 3 are melted under heating, thereby making the fluxes according to Examples 1 to 16 and Comparative Examples 1 to 7.

These fluxes were individually mixed with a Sn-3Ag-0.5Cu solder alloy powder (particle size: from 20 $\mu$m to 38 $\mu$m) according to the recipes in Tables 1 to 3, thereby making the solder pastes according to Examples 1 to 16 and Comparative Examples 1 to 7.

Unless otherwise specified, the values described in Tables 1 to 3 means % by mass.

[Table 1]

| | | Example 1 | Example 2 | Example 3 | Example 4 | Example 5 | Example 6 | Example 7 | Example 8 |
|---|---|---|---|---|---|---|---|---|---|
| Base resin | Acrylic resin | 35 | 35 | 35 | 35 | 35 | 35 | 35.5 | 35.1 |
| | KE-604 *1 | 11 | 11 | 11 | 11 | 11 | 11 | 10.8 | 10.7 |
| Activator | Suberic acid | 3 | 3 | 3 | 3 | 3 | 3 | 3 | 3 |
| | Succinic acid | 0.2 | 0.2 | 0.2 | 0.2 | 0.2 | 0.2 | 0.2 | 0.2 |
| | Dibromobutenediol | 1 | 1 | 1 | 1 | 1 | 1 | 1 | 1 |
| Solvent | Dibutyl maleate | 31.8 | 31.8 | 31.8 | 31.8 | 31.8 | 31.8 | 34 | 34.1 |
| | 2-ethylhexyl diglycol | 9 | 9 | 9 | 9 | 9 | 9 | 9 | 9 |
| Additive | Trimethylolpropane | 3 | | | | | | 0.5 | 1 |
| | Trimethylolethane | | 3 | | | | | | |
| | Pentaerythritol | | | 3 | | | | | |
| | Di(trimethylolpropane) | | | | 3 | | | | |
| | 2,2-bis(hydroxymethyl)propionic acid | | | | | 3 | | | |
| | 2,4-diethyl-1,5-pentanediol | | | | | | 3 | | |
| Other additive | Glycerol | | | | | | | | |
| | 1,2-dodecanediol | | | | | | | | |
| | Neopentyl glycol | | | | | | | | |
| Thixotropic agent | TALEN VA-79 *2 | 5 | 5 | 5 | 5 | 5 | 5 | 5 | 4.9 |
| Antioxidant | Irganox 245 *3 | 1 | 1 | 1 | 1 | 1 | 1 | 1 | 1 |
| Flux | | 10.6 | 10.6 | 10.6 | 10.6 | 10.6 | 10.6 | 10.6 | 10.7 |
| Solder alloy powder | | 89.4 | 89.4 | 89.4 | 89.4 | 89.4 | 89.4 | 89.4 | 89.3 |

Examples 3, 5 and 6 are not according to the present invention.

[Table 2]

| | | Example 9 | Example 10 | Example 11 | Example 12 | Example 13 | Example 14 | Example 15 | Example 16 |
|---|---|---|---|---|---|---|---|---|---|
| Base resin | Acrylic resin | 34.6 | 34.2 | 33.3 | 30.6 | 28.8 | 27 | 25.2 | |
| | KE-604 *1 | 10.5 | 10.4 | 10.1 | 9.2 | 8.6 | 8 | 7.4 | 46 |
| Activator | Suberic acid | 3 | 3 | 3 | 3 | 3 | 3 | 3 | 3 |
| | Succinic acid | 0.2 | 0.2 | 0.2 | 0.2 | 0.2 | 0.2 | 0.2 | 0.2 |
| | Dibromobutenediol | 1 | 1 | 1 | 1 | 1 | 1 | 1 | 1 |
| Solvent | Dibutyl maleate | 34.3 | 34.4 | 34.7 | 44.6 | 45.2 | 45.8 | 46.4 | 31.8 |
| | 2-ethylhexyl diglycol | 9 | 9 | 9 | | | | | 9 |
| Additive | Trimethylolpropane | 1.5 | 2 | 3 | 6 | 8 | 10 | 12 | 3 |
| | Trimethylolethane | | | | | | | | |
| | Pentaerythritol | | | | | | | | |
| | Di(trimethylolpropane) | | | | | | | | |
| | 2,2-bis(hydroxymethyl) propionic acid | | | | | | | | |
| | 2,4-diethyl-1,5-pentanediol | | | | | | | | |
| Other additive | Glycerol | | | | | | | | |
| | 1,2-dodecane diol | | | | | | | | |
| | Neopentyl glycol | | | | | | | | |
| Thixotropic agent | TALEN VA-79 *2 | 4.9 | 4.8 | 4.7 | 4.4 | 4.2 | 4 | 3.8 | 5 |
| Antioxidant | Irganox 245 *3 | 1 | 1 | 1 | 1 | 1 | 1 | 1 | 1 |
| Flux | | 10.7 | 10.7 | 10.8 | 11 | 11.1 | 11.3 | 11.4 | 10.6 |
| Solder alloy powder | | 89.3 | 89.3 | 89.2 | 89 | 88.9 | 88.7 | 88.6 | 89.4 |

EP 3 530 397 B1

9

Example 16 is not according to the present invention

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Base resin | Acrylic resin | 35 | 35 | 35 | 35 | | 22.5 | 18 |
| | KE-604 *1 | 11 | 11 | 11 | 11 | 49 | 6.5 | 5 |
| Activator | Suberic acid | 3 | 3 | 3 | 3 | 3 | 3 | 3 |
| | Succinic acid | 0.2 | 0.2 | 0.2 | 0.2 | 0.2 | 0.2 | 0.2 |
| | Dibromobutenediol | 1 | 1 | 1 | 1 | 1 | 1 | 1 |
| Solvent | Dibutyl maleate | 31.8 | 31.8 | 31.8 | 31.8 | 31.8 | 47.3 | 48.8 |
| | 2-ethylhexyl diglycol | 12 | 9 | 9 | 9 | 9 | | |
| Additive | Trimethylolpropane | | | | | | 15 | 20 |
| | Trimethylolethane | | | | | | | |
| | Pentaerythritol | | | | | | | |
| | Di(trimethylolpropane) | | | | | | | |
| | 2,2-bis(hydroxymethyl) propionic acid | | | | | | | |
| | 2,4-diethyl-1,5-pentanediol | | | | | | | |
| Other additive | Glycerol | | 3 | | | | | |
| | 1,2-dodecane diol | | | 3 | | | | |
| | Neopentyl glycol | | | | 3 | | | |
| Thixotropic agent | TALEN VA-79 *2 | 5 | 5 | 5 | 5 | 5 | 3.5 | 3 |
| Antioxidant | Irganox 245 *3 | 1 | 1 | 1 | 1 | 1 | 1 | 1 |
| Flux | | 10.6 | 10.6 | 10.6 | 10.6 | 10.6 | 11.6 | 11.7 |

EP 3 530 397 B1

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Solder alloy powder | | 89.4 | 89.4 | 89.4 | 89.4 | 89.4 | 88.4 | 88.3 |
| *1 Hydrogenated acid modified rosin, manufactured by Arakawa Chemical Industries, Ltd.<br>*2 Thixotropic agent (higher fatty acid bisamide), manufactured by Kyoeisha Chemical Co., Ltd.<br>*3 Hindered phenol antioxidant, manufactured by BASF JAPAN LTD. | | | | | | | | |

<Void test>

An electronic circuit board (FR-4 board, OSP-treated) having a Cu land of 5.9 mm X 5.9 mm (soldering land) and a metal mask (thickness: 150 um) corresponding to the Cu land were provided.

Using a printing machine (product name: SP60P-L, manufactured by Panasonic Corporation) and the metal mask, the solder pastes according to Examples and Comparative Examples were individually printed on electronic circuit boards.

Subsequently, four QFN chip components (corresponding to the above-described land size, electrode: Sn-plated) were placed on each of the electronic circuit boards having a solder paste printed thereon, these objects were heated using a reflow furnace (product name: TNP40-577PH, manufactured by TAMURA Corporation), thereby making electronic circuit mounted boards having solder joined bodies. The reflow conditions at this time were as follows: preheating at 150°C to 200°C for 70 seconds to 90 seconds, the peak temperature was 230°C to 240°C, the period of time at 220°C or higher was 25 seconds to 35 seconds, and the oxygen concentration was 1,000 ppm $\pm$ 200 ppm.

The solder joints formed on the electronic circuit mounted boards were observed using an X-ray apparatus (product name: NLX-5000, manufactured by Nagoya Electric Works, Co., Ltd.) from the electronic component side, and the maximum void area ratio (%) and the average void area ratio (%) were calculated.

Firstly, on the basis of the surface seen from the electronic component side, "the void area" occurred in solder joints of the QFN chip components and "the area having solder joints" on each of the QFN chip components, which were observed at the same magnification, on each of the electronic circuit mounted boards were measured.

Then, the void area ratio was calculated for every QFN chip using to the following calculation formula.

```
Void area ratio =100 X "void area" / "area having a solder

joint"
```

Maximum void area ratio (%)

Regarding the void area ratio calculated by the above calculation formula, the void area ratio (maximum void area ratio (%)) which exhibited the maximum value on each electronic circuit mounted board was evaluated according to the following criterion. The results are listed in Tables 4 to 6.

$\bigcirc$: Maximum void area (%) is 27% or less
$\triangle$: Maximum void area (%) is more than 27% and less than 33%
$\times$: Maximum void area (%) is 33% or more

Average void area ratio (%)

Regarding the void area ratio calculated by the above calculation formula, the average void area ratio (%) on each electronic circuit mounted board (total void area ratio in QFN chip components/4 (number of QFN chip component)) was calculated, and evaluated according to the following criterion. The results are listed in Tables 4 to 6.

$\bigcirc$: Average void area ratio (%) is 27% or less
$\triangle$: Average void area ratio (%) is more than 27% and less than 33%
$\times$: Average void area ratio (%) is 33% or more

<Printability>

An electronic circuit board (FR-4 board, OSP-treated) having a Cu land of 5.9 mm X 5.9 mm (soldering land) and a metal mask corresponding to the Cu land (thickness: 150 um) were provided.

Using a printing machine (product name: SP60P-L, manufactured by Panasonic Corporation) and the metal mask, the solder pastes according to Examples and Comparative Examples were individually printed on electronic circuit boards, the presence or absence of blur of the print pattern was confirmed, and evaluated as follows. The results are listed in Tables 4 to 6.

The printing conditions were as follows: squeeze speed: 30 mm/second, the releasing speed: 10 mm/second.

$\bigcirc$: No blur
$\times$: With blur

[Table 4]

| | Example 1 | Example 2 | Example 3 | Example 4 | Example 5 | Example 6 | Example 7 | Example 8 |
|---|---|---|---|---|---|---|---|---|
| Maximum void area ratio (%) | ○ | ○ | ○ | ○ | △ | △ | ○ | ○ |
| Average void area ratio (%) | ○ | ○ | ○ | ○ | ○ | ○ | ○ | ○ |
| Printability | ○ | ○ | ○ | ○ | ○ | ○ | ○ | ○ |

Examples 3, 5 and 6 are not according to the present invention.

[Table 5]

| | Example 9 | Example 10 | Example 11 | Example 12 | Example 13 | Example 14 | Example 15 | Example 16 |
|---|---|---|---|---|---|---|---|---|
| Maximum void area ratio (%) | ○ | ○ | ○ | ○ | ○ | ○ | ○ | ○ |
| Average void area ratio (%) | ○ | ○ | ○ | ○ | ○ | ○ | ○ | ○ |
| Printability | ○ | ○ | ○ | ○ | ○ | ○ | ○ | ○ |

Example 16 is not according to the present invention.

[Table 6]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Maximum void area ratio (%) | × | × | × | × | × | △ | ○ |
| Average void area ratio (%) | × | × | ○ | △ | △ | △ | ○ |
| Printability | ○ | ○ | ○ | ○ | ○ | × | × |

As indicated above, the solder pastes according to Examples have lower maximum void area ratios and average void area ratios even in solder joints of electronic components having a large Cu land of 5.9 mm X 5.9 mm (= area: 25 mm$^2$ or more), in comparison with Comparative Examples. More specifically, the larger the area of the Cu land (= the area to have a solder joint), the gas taken in the neighborhood of the center of the solder joint is hard to be discharged from the solder joint, and tends to remain there in the form of a void. However, the solder pastes according to Examples are found to reduce the area ratio of voids occurring in a solder joint even in a solder joint of an electronic component having such a Cu land.

In particular, Examples 1 to 4 and 7 to 16 including trimethylolpropane, trimethylolethane, and pentaerythritol di(trimethylolpropane) having three or more hydroxymethyl groups as an additive further reduce the maximum void area ratio and the average void area ratio. Among them, particularly Examples 8 to 12 and 16, in which the blending amount of the compound having three or more hydroxymethyl groups is 1% by mass or more and 6% by mass or less with reference to the total amount of the flux, are found to reduce the maximum void area ratio and the average void area ratio.

On the other hand, the solder pastes according to Comparative Examples 1 to 5 exhibited high maximum void area ratios and average void area ratios. In particular, in Comparative Examples 2 to 4, the additives are glycerol which has two hydroxymethyl groups but is a tertiary alcohol, 1,2-dodecanediol which has only one hydroxymethyl group, and neopentyl glycol which has two hydroxymethyl groups but has a boiling point of lower than 220°C, so that they do not reduce the maximum void area ratio and the average void area ratio in comparison with Examples.

Additionally, Comparative Examples 6 and 7 including the compound having three or more hydroxymethyl groups in an amount of 12% by mass decreased printability of the solder paste.

**Claims**

1. A flux comprising a base resin, an activator, a solvent, and an additive,

   the base resin being a combination of a rosin resin and an acrylic resin,
   the additive being at least one selected from trimethylolpropane, trimethylolethane and di(trimethylolpropane),
   the additive being present in an amount of 0.5% by mass or more and 12% by mass or less with reference to the total amount of the flux,
   wherein the activator is at least one of a carboxylic acid or a halogen-containing compound.

2. The flux according to claim 1, wherein the blending amount of the additive is 1% by mass or more and 6% by mass or less with reference to the total amount of the flux.

3. A solder paste comprising the flux according to claim 1 or claim 2 and a solder alloy powder.

4. A use of the solder paste according to claim 3 on an electronic circuit board having a soldering land with an area of 25 mm$^2$ or more.

5. A method for producing an electronic circuit mounted board, comprising

   printing the solder paste according to claim 3 on an electronic circuit board,
   mounting an electronic component on the electronic circuit board having the solder paste printed thereon, and
   reflowing the electronic circuit board having the electronic component mounted thereon at a predetermined temperature, thereby forming a solder joined body on the electronic circuit board, the solder joined body being formed of the solder paste, and joining the electronic component and the electronic circuit board.

6. An electronic circuit mounted board prepared according to the method of claim 5.

7. An electronic controller comprising the electronic circuit mounted board according to claim 6.

**Patentansprüche**

1. Flussmittel, das ein Grundharz, einen Aktivator, ein Lösungsmittel und ein Additiv umfasst,

   wobei das Grundharz eine Kombination aus einem Kolophoniumharz und einem Acrylharz ist,
   wobei das Additiv mindestens eines ist, das aus Trimethylolpropan, Trimethylolethan und Di(trimethylolpropan) ausgewählt ist,
wobei das Additiv bezogen auf die Gesamtmenge des Flussmittels in einer Menge von 0,5 Masse-% oder mehr und 12 Masse-% oder weniger vorhanden ist,
wobei der Aktivator mindestens eines von einer Carbonsäure oder einer ein Halogen enthaltenden Verbindung ist.

2. Flussmittel nach Anspruch 1, wobei die Mischmenge des Additivs bezogen auf die Gesamtmenge des Flussmittels 1 Masse-% oder mehr und 6 Masse-% oder weniger ist.

3. Lötpaste, die das Flussmittel nach Anspruch 1 oder Anspruch 2 und ein Lötlegierungspulver umfasst.

4. Verwendung der Lötpaste nach Anspruch 3 auf einer elektronischen Leiterplatte mit einem Lötanschluss mit einer Fläche von 25 mm$^2$ oder mehr.

5. Verfahren zum Produzieren einer Platine mit einer elektronischen Schaltung, das Folgendes umfasst

Drucken der Lötpaste nach Anspruch 3 auf eine elektronische Leiterplatte,
Montieren einer elektronischen Komponente auf der elektronischen Leiterplatte, auf der die Lötpaste aufgedruckt ist, und
Reflowing der elektronischen Leiterplatte, auf der die elektronische Komponente montiert ist, bei einer vorbestimmten Temperatur, wodurch ein durch Lot verbundener Körper auf der elektronischen Leiterplatte gebildet wird, wobei der durch Lot verbundene Körper aus der Lötpaste gebildet ist, und die elektronische Komponente und die elektronische Leiterplatte verbunden werden.

6. Platine mit einer elektronischen Schaltung, die gemäß dem Verfahren von Anspruch 5 angefertigt wird.

7. Elektronische Steuerung, die die Platine mit einer elektronischen Schaltung nach Anspruch 6 umfasst.

**Revendications**

1. Flux comprenant une résine de base, un activateur, un solvant, et un additif,

la résine de base étant une combinaison d'une résine colophane et d'une résine acrylique,
l'additif étant au moins un élément choisi parmi le triméthylolpropane, le triméthyloléthane et le di(triméthylolpropane),
l'additif étant présent en une quantité de 0,5 % en masse ou plus et 12 % en masse ou moins par rapport à la quantité totale du flux,
dans lequel l'activateur est au moins l'un parmi un acide carboxylique ou un composé contenant un halogène.

2. Flux selon la revendication 1, dans lequel la quantité de mélange de l'additif est de 1 % en masse ou plus et de 6 % en masse ou moins par rapport à la quantité totale du flux.

3. Pâte à souder comprenant le flux selon la revendication 1 ou la revendication 2 et une poudre d'alliage de soudure.

4. Utilisation de la pâte à souder selon la revendication 3 sur une carte de circuit électronique ayant une zone de soudage d'une superficie de 25 mm$^2$ ou plus.

5. Procédé pour de production d'une carte montée sur circuit électronique, comprenant les étapes consistant à

imprimer la pâte à souder selon la revendication 3 sur une carte de circuit électronique,
monter un composant électronique sur la carte de circuit électronique sur laquelle est imprimée la pâte à souder, et
refusionner la carte de circuit électronique sur laquelle est monté le composant électronique à une température prédéterminée, formant ainsi un corps joint par soudure sur la carte de circuit électronique, le corps joint par soudure étant formé de la pâte à souder, et joindre le composant électronique et la carte de circuit électronique.

6. Carte montée sur circuit électronique préparée selon le procédé de la revendication 5.

7. Dispositif de commande électronique comprenant la carte montée sur circuit électronique selon la revendication 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017136636 A
- JP 2017035731 A
- CN 106078002 A
- JP 2004330269 A
- CN 106001998 A